# EUROPÄISCHE PATENTSCHRIFT

(11) **EP 0 467 226 B1**
(45) Veröffentlichungstag und Bekanntmachung des Hinweises auf die Patenterteilung: **20.12.1995**
(21) Anmeldenummer: 91111604.4
(22) Anmeldetag: 12.07.1991
(51) Int. Cl.: B01D 25/168, B01D 29/23

(54) **Filtratabscheideeinrichtung**
Device for the separation of filtrate
Dispositif de séparation de filtrat

(30) Priorität: 19.07.1990 DE 4022960
(43) Veröffentlichungstag der Anmeldung: 22.01.1992
(73) Patentinhaber: Ippendorf, Ralph, D-42399 Wuppertal (DE)
(72) Erfinder: Ippendorf, Ralph, D-42399 Wuppertal (DE)
(74) Vertreter: von Rohr, Hans Wilhelm, Dipl.-Phys.

(56) Entgegenhaltungen:
- DE-A- 3 411 087
- US-A- 4 172 790
- US-A- 4 826 607

## Beschreibung

Die Erfindung betrifft eine Filtratabscheideeinrichtung, insbesondere für die Klärschlammentsorgung, mit den Merkmalen des Oberbegriffs von Anspruch 1.

Filtratabscheideeinrichtungen der in Rede stehenden Art sind insbesondere auf dem Gebiet der Klärschlammentsorgung ein unentbehrliches Hilfsmittel, um die Klärschlämme wirtschaftlich entsorgen zu können. In einer solchen Filtratabscheideeinrichtung wird das flüssige Filtrat aus dem Klärschlamm herausgepreßt, so daß schließlich nur noch ein weitestgehend trockener Filterkuchen überbleibt, der entweder deponierfähig ist oder weiterverarbeitet, insbesondere verfeuert werden kann. Ähnliche Probleme wie bei der Klärschlammentsorgung gibt es aber auch auf anderen Gebieten, beispielsweise auf dem Gebiet der Lackschlammentsorgung aus Lackierereien, im Gebiet der Lebensmittelindustrie, bis hin zu der Müllverdichtung mit oder ohne Flüssigkeitsanfall.

Die aus der Praxis bekannten Filtratabscheideeinrichtungen bestehen aus einer Mehrzahl von jeweils vertikal angeordneten und hintereinander aufgereihten Platten, deren vordere und hintere Oberflächen die Wandungen von zwischen den Platten gebildeten Aufnahmeräumen für den zu filternden Schlamm bilden. Eine durch die Platten verlaufende mittige Zulauföffnung bildet den Schlammzulauf zu den Aufnahmeräumen. Die Aufnahmeräume zwischen den einzelnen Platten sind nach außen hin durch einen Rahmen abgedichtet. Die Wandungen weisen eine Vielzahl von kanalartigen Einformungen auf, die in einem am unteren Ende jeder Wandung angeordneten Filtratablauf zusammengeführt sind. Jede so mit Kanälen versehene Wandung ist mit einer flexiblen Filtermatte überdeckt, die am Rahmen befestigt ist. Alle Platten sind miteinander über in Längsrichtung verlaufende Ständer verbunden. Bei einer üblichen Größe der Platten von etwa 2 bis 4 qm hat eine solche Einrichtung bei insgesamt 40 Platten ein Gewicht von ca. 25 to. Solche Filtratabscheideeinrichtungen sind z.B aus US-A-4 172 790 bekannt geworden.

Im Betrieb werden die Platten durch eine hydraulische Presse zusammengefahren und nehmen einen fest vorgegebenen Sollabstand ein, durch den die Aufnahmeräume zwischen den Platten definiert sind. Dann wird Klärschlamm (oder ein sonstiges zu filterndes Medium) unter hohem Druck über den Schlammzulauf in die Aufnahmeräume eingeleitet. Durch den Fülldruck des Klärschlammes wird der Klärschlamm ausgepreßt. Durch die Kanalstruktur der Oberflächen der Platten kann das Filtrat aus jedem Aufnahmeraum in den Filtratablauf ablaufen. Stellt sich heraus, daß die Aufnahmeräume verstopft sind, wird der Filtervorgang beendet. Die Platten werden auseinandergefahren und die nunmehr weitgehend trockenen Filterkuchen aus den verschiedenen Aufnahmeräumen entnommen.

Die voranstehend gegebene Schilderung des Standes der Technik macht deutlich, daß Filtratabscheideeinrichtungen herkömmlicher Konstruktion nur im großen Rahmen einsetzbar sind und einen hohen konstruktiven und kostenmäßigen Aufwand erfordern. Das Problem der bekannten Filtratabscheideeinrichtung ist also, daß diese zu kompliziert, zu großvolumig und anlagentechnisch sowie kostenmäßig zu aufwendig ist.

Der Erfindung liegt die Aufgabe zugrunde, das zuvor aufgezeigte Problem zu lösen, also eine Filtratabscheideeinrichtung anzugeben, die die zuvor erörterten Nachteile nicht aufweist.

Die zuvor aufgezeigte Aufgabe ist bei einer Filtratabscheideeinrichtung mit den Merkmalen des Oberbegriffs von Anspruch 1 durch die Merkmale des kennzeichnenden Teils von Anspruch 1 gelöst.

Bevorzugte Ausgestaltungen und Weiterbildungen der erfindungsgemäßen Filtratabscheideeinrichtung sind Gegenstand der Patentansprüche 2 bis 9. Patentanspruche 10 befaßt sich mit einer Anlage aus einer Mehrzahl von erfindungsgemäßen Filtratabscheideeinrichtungen.

Die erfindungsgemäße Filtratabscheideeinrichtung ist als Einzelstück oder zu mehreren in einer größeren Anlage äußerst flexibel einsetzbar. Da diese Filtratabscheideeinrichtung nur mit Vakuum arbeitet, letztlich also den Umgebungsdruck ausnutzt, arbeitet sie wesentlich kostengünstiger als bekannte Filtratabscheideeinrichtungen. Der konstruktive Aufbau der erfindungsgemäßen Filtratabscheideeinrichtung ist außerordentlich einfach, die verwendeten Bauteile sind sehr kostengünstig. Dies liegt insbesondere daran, daß lediglich Druckdifferenzen von maximal 1 bar aufzunehmen sind, beispielsweise von der Dichtungsanordnung, den Wandungen und den Rahmenteilen. Das hat wiederum damit zu tun, daß hier nur mit Unterdruck gearbeitet wird. Die bei den aus dem Stand der Technik bekannten Filtratabscheideeinrichtungen einzusetzenden Hochdruck-Dichtungsanordnungen müssen hier nicht eingesetzt werden. Ein weiterer Vorteil der erfindungsgemäßen Filtratabscheideeinrichtung besteht darin, daß sie, entsprechende Baugröße vorausgesetzt, sogar transportabel eingesetzt werden kann. Üblicherweise kann eine solche transportable Einrichtung eine Maximalhöhe von ca. 2 m bzw. einen Durchmesser von etwa 2 m aufweisen. Ein besonderer Vorteil besteht in der Praxis darin, daß die erfindungsgemäße Filtratabscheideeinrichtung aufgrund des Einsatzes einer Vakuumpumpe im Prinzip selbstabdichtend funktioniert. Der Umgebungsdruck, der die Filterwirkung zur Folge hat, wirkt gleichzeitig druckverstärkend auf die Dichtungsanordnung, wenn diese zuvor richtig positioniert worden ist.

Von Bedeutung ist ferner, daß ein ansonsten notwendiges Erwärmen des Klärschlammes nicht oder nur noch in verringertem Maße erforderlich ist, um eine gute Entfeuchtung zu realisieren. Der Unterdruck führt nämlich zu einer geringeren Siedetemperatur des Wassers im Klärschlamm.

Wesentlich ist, daß die Filtermatten von den Wandungen durch die Abstandshalter mehr oder weniger vollflächig getrennt sind. Dadurch befindet sich vollflächig zwischen den Filtermatten und den Wandungen ein Raum, in dem der Unterdruck von der Vakuumpumpe her wirken kann. Wesentlich ist also, daß die Abstandshalter so konstruiert sind, daß durch den Unterdruck die Filtermatten nicht an die Wandungen herangedrückt werden. Überraschenderweise werden die Filtermatten durch den auftretenden Druck auch nicht zerrissen. Das liegt daran, daß die Filtermatten von außen wie von innen her mehr oder weniger dem gleichen Druck ausgesetzt sind. Der auf den Wandungen lastende Außendruck wird nämlich durch den Gegendruck des Filterkuchens kompensiert. In entsprechender Weise werden auch die Wandungen druckmäßig "geschont".

Will man die Druckdifferenz an den Filtermatten erhöhen, um die Filterwirkung zu verbessern, kann man auf die Wandungen von außen auch einen Überdruck aufbringen. Das ändert nichts am Grundprinzip der Erfindung. Man muß lediglich die Bauteile dann entsprechend auf höhere Druckdifferenzen auslegen.

Im folgenden wird die Erfindung anhand lediglich Ausführungsbeispiele darstellenden Zeichnungen näher erläutert. In den Zeichnungen zeigt
- Fig. 1: in einer übersichtsdarstellung eine erfindungsgemäße Filtratabscheideeinrichtung,
- Fig. 2: in vergrößerter Darstellung den Bereich des Schlammzulaufes der Filtratabscheideeinrichtung aus Fig. 1,
- Fig. 3: in vergrößerter Darstellung den Bereich des Filtratablaufes der erfindungsgemäßen Filtratabscheideeinrichtung,
- Fig. 4: auschnittsweise, in vergrößerter Darstellung einen Teil der Wandung in einem ersten Ausführungsbeispiel,
- Fig. 5: in einer Fig. 4 entsprechenden Darstellung einen Teil der Wandung in einem zweiten Ausführungsbeispiel,
- Fig. 6: in einer Fig. 2 entsprechenden Darstellung ein zweites Ausführungsbeispiel und
- Fig. 7: in einer Fig. 3 entsprechenden Darstellung das zweite Ausführungsbeispiel.

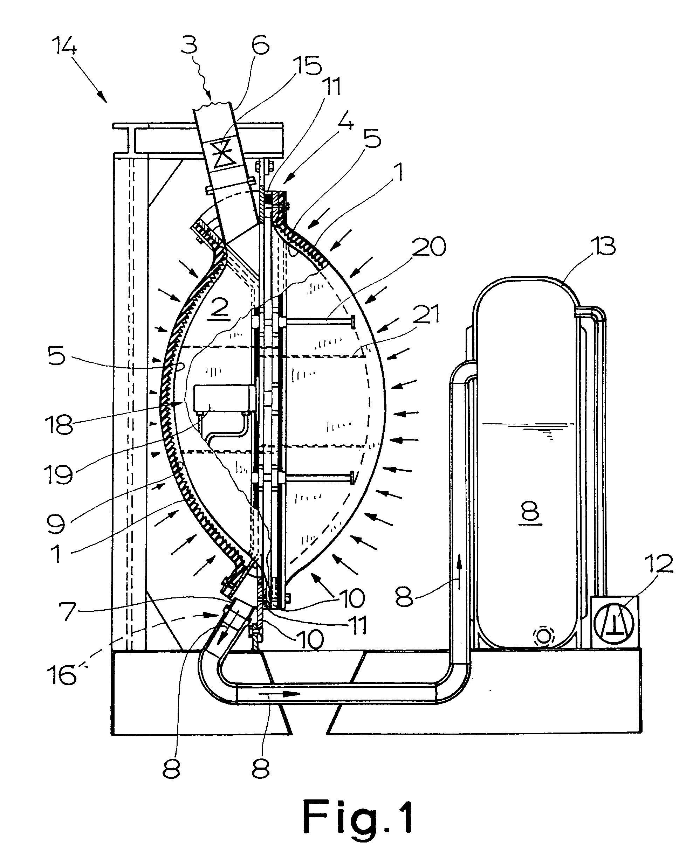

Die in Fig. 1 dargestellte Filtratabscheideeinrichtung eignet sich insbesondere für die Klärschlammentsorgung, ist aber auch für andere Entsorgungsvorhaben einsetzbar.

Die Filtratabscheideeinrichtung weist einen von zwei Wandungen 1 begrenzten Aufnahmeraum 2 für den zu filternden Schlamm 3, der hier nur angedeutet ist, auf. Die Wandungen 1 werden von einem den Aufnahmeraum 2 abdichtenden Rahmen 4 verbunden. Im Aufnahmeraum 2 sind an den Wandungen 1 Filtermatten 5 zur Fest/Flüssig-Trennung angeordnet. Zumindest an einer wandung 1 ist eine solche Filtermatte 5 angeordnet. Mit dem Aufnahmeraum 2 verbunden ist ein Schlammzulauf 6, während mit dem Raum zwischen den Wandungen 1 und den Filtermatten 5 bzw. mindestens einer Wandung 1 und der Filtermatte 5 ein Filtratablauf 7 verbunden ist. Zur Entfernung des vom Filtrat 8, hier ebenfalls nur angedeutet, befreiten, trockenen Filterkuchens sind die Wandungen 1 voneinander entfernbar, wobei dann gleichzeitig der Rahmen 4 öffenbar ist.

Wesentlich für die Erfindung ist nun zunächst, daß die Wandungen 1 bzw. mindestens eine Wandung 1 aus einem flexibel verformbaren, ggf. auch begrenzt elastischen, flüssigkeits- und gasundurchlässigen Material bestehen. Bei einem solchen Material kann es sich primär um Gummi oder eine Gummimischung, ggf. mit einer verstärkenden Fasereinlage oder Textilgewebeeinlage handeln, aber auch eine kunststoffbeschichtete Gewebekonstruktion wäre denkbar. Zwischen den Wandungen 1 und den ebenso flexiblen Filtermatten 5 sind den Bewegungen der Wandungen 1 und der Filtermatten 5 folgende Abstandshalter 9 vorgesehen, die die Filtermatten 5 von den Wandungen 1 stets in einem solchen Abstand halten, daß das aus dem Klärschlamm abgezogene Filtrat zwischen Filtermatten 5 und Wandungen 1 ablaufen kann. Solche Abstandshalter 9 können auch die Form von Kanalstrukturen, wie im Stand der Technik bekannt, haben. Bei der Materialvorgabe für die Wandungen 1 wird es sich aber häufiger um noppenartige Strukturen handeln.

Weiter ist nun wesentlich, daß jeder Wandung 1 ein formsteifes Rahmenteil 10 des Rahmens 4 zugeordnet ist und daß die Rahmenteile 10 über eine Dichtungsanordnung 11 abdichtend miteinander verbunden sind. Die Rahmenteile dienen der Stabilisierung und Aufspannung der Wandungen 1 und Filtermatten 5. Grundsätzlich wäre es auch möglich, eine Wandung 1 nicht flexibel verformbar zu gestalten, sondern als formsteifes Teil auszuführen. Dann wäre diese Wandung 1 regelmäßig fest mit dem Rahmenteil 10 verbunden, wenn nicht gar einstückig mit diesem ausgeführt.

Für die Funktion der erfindungsgemäßen Filtratabscheideeinrichtung ist nun schließlich entscheidend, daß der Filtratablauf 7 oder ein weiterer, mit dem Raum zwischen den Wandungen 1 und den Filtermatten 5 verbundener Absaugstutzen an eine Vakuumpumpe 12 angeschlossen bzw. anschließbar ist. Fig. 1 macht deutlich, daß der Anschluß, der hier am Filtratablauf 7 angreift, mit der Vakuumpumpe 12 über einen Filtratabscheider 13 verbunden ist. Das ist natürlich zweckmäßig, damit die Vakuumpumpe möglichst kein Filtrat pumpt. Der Filtratabscheider 13 hat hier die Form eines Filtrat-Sammeltanks.

Im dargestellten und insoweit bevorzugten Ausführungsbeispiel befindet sich der Schlammzulauf 6 für den Klärschlamm 3 oben am Rahmen 4, während sich der Filtratablauf 7 unten befindet. Durch das Eigengewicht des Schlammes 3 erfolgt hier schon der Zulauf in den Aufnahmeraum 2, während das Filtrat 8 ebenfalls unter seinem Eigengewicht schon dem Filtratablauf 7 zuströmt.

Im Grundsatz ist die äußere Form, die Querschnittsform der erfindungsgemäßen Filtratabscheideeinrichtung beliebig wählbar. Wie in der Technik häufig vorgesehen, ist es besonders zweckmäßig, wenn der äußere Querschnitt ein kreisrunder Querschnitt ist, also der Rahmen 4 außen einen im wesentlichen kreisrunden Querschnitt aufweist. In Fig. 1 zeigt dabei, daß der Rahmen 4 hier in vertikaler Anordnung in einem Traggestell 14 montiert ist. Das entspricht der Zulauf-/Ablaufsituation, die nach bevorzugter Lehre zuvor beschrieben worden ist, in besonderem Maße.

Es versteht sich von selbst, daß ein Vakuum im Aufnahmeraum 2 nur dann aufgebaut werden kann, wenn durch den Schlammzulauf 6 dem Unterdruck folgend kein weiterer Schlamm nachströmt. Folglich empfiehlt es sich, daß am Schlammzulauf 6 ein Absperrventil 15, vorzugsweise in Form eines Absperrschiebers, abgeordnet ist. In entsprechender Weise kann es sich empfehlen, auch am Filtratablauf 7 ein Absperrventil 16 vorzusehen, wenn das aus konstruktiven Gründen erforderlich sein sollte.

In Fig. 1 der Zeichnung erkennt man gut, wie der Rahmen 4 im Traggestell 14 in vertikaler Anordnung angebracht ist, so daß zu filtrierender Schlamm 3 durch den Schlammzulauf 6 unter eigener Schwerkraft sowie dem von der Vakuumpumpe 12 erzeugten Unterdruck folgend in den Aufnahmeraum 2 von oben her einströmen kann. In Fig. 1 ist links dabei die Darstellung aufgeschnitten, so daß das Innere des Aufnahmeraums 2 erkannt werden kann und die entsprechende Wandung 1 hier im Schnitt dargestellt ist. Man erkennt dabei dann rechts in der äußeren Ansicht des Randes des Rahmens 4 die äußere Konstruktion.

An der Wandung 1, die links im Schnitt dargestellt ist, erkennt man die Abstandshalter 9, die hier durch eine entsprechende Konturierung der Innenfläche der Wandung 1 als integrale Bestandteile der vorzugsweise aus einem Gummimaterial bestehenden Wandung 1 ausgeführt sind.

Wird der Schlamm 3 in den Aufnahmeraum 2 vollständig eingefüllt und wird dann das Absperrventil 15 geschlossen, so wird aufgrund des von der Vakuumpumpe 12 erzeugten Unterdruckes das Volumen der Filtratabscheideeinrichtung verringert, d. h. die Wandungen 1 werden langsam aneinander herangezogen. Dabei wird die Flüssigkeit aus dem Schlamm 3 herausgepreßt, durchsetzt die Filtermatten 5 und strömt im Raum zwischen Filtermatten 5 und Wandungen 1, der von den Abstandshaltern 9 garantiert wird, in den Filtratablauf 7. Die Konstruktion ist außerordentlich einfach und zuverlässig und damit auch sehr kostengünstig. Man erkennt, daß der Rahmen 4 mit den Rahmenteilen 10 und der Dichtungsanordnung 11 sich unter der Wirkung des Unterdruckes im Aufnahmeraum 2 ohne weiteres selbst abdichtet. Man braucht hier also keine aufwendigen Abdichtmaßnahmen vorzusehen.

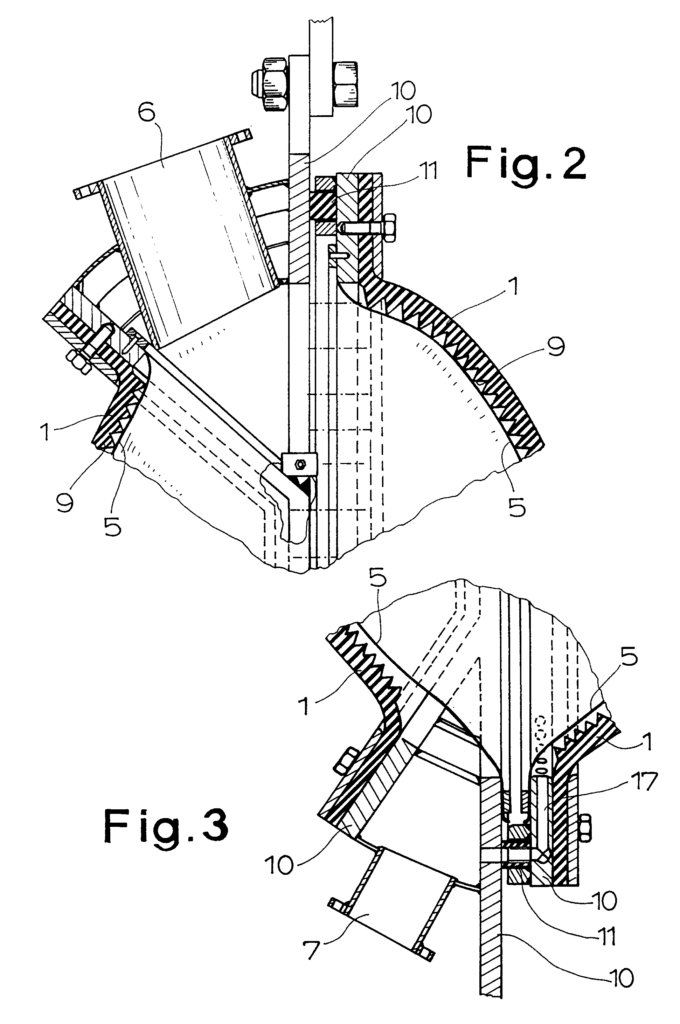

Fig. 1 läßt in Verbindung mit den Fig. 2 und 3 weitere Details der erfindungsgemäßen Filtratabscheideeinrichtung erkennen. Zunächst bedarf es kontruktiver Maßnahmen, vom Schlammzulauf 6 her eine Verbindung in den Aufnahmeraum 2 zu schaffen, dies aber mit dem formsteifen Rahmen 4 zu verbinden. Entsprechendes gilt im Bereich des Filtratablaufs 7. Dazu ist nun hier nach bevorzugter Lehre vorgesehen, daß an einem Rahmenteil 10 der Schlammzulauf 6 in Form eines Zulaufstutzens und am gleichen oder am anderen Rahmenteil 10 der Filtratablauf 7 in Form eines Ablaufstutzens angeordnet ist und daß der Rahmenteil 10 im Bereich des Filtratablaufes 7 den Befestigungsbereich für die Wandung 1 auf einer Seite und den Befestigungsbereich für die Filtermatte 5 auf der anderen Seite des Filtratablaufes 7 aufweist. Die zuvor erörterte Konstruktion reicht ohne weitere Maßnahmen dann wenn, was ja auch möglich ist, nur eine Wandung 1 aus flexiblem Gummimaterial od. dgl. besteht. Dann hat man auch nur eine Filtermatte 5 und die Anordnung ist ohne weiteres mit den erläuterten Maßnahmen komplett. Bei der dargestellen Ausführungsform mit zwei flexiblen Wandungen 1, die die bevorzugte Ausführungsform darstellt, tritt Filtrat aber auch an der anderen Wandung 1 auf. Hier muß man im Rahmen 4 einen Übertrittskanal 17 für das von der anderen Wandung 1 kommende Filtrat 8 vorsehen. Das zeigt Fig. 3 sehr gut. Fig. 3 läßt dabei weiter erkennen, daß hier, nach bevorzugter Lehre, der Übertrittskanal 17 in der Dichtungsanordnung 11 verläuft. Das ist natürlich eine besonders zweckmäßige Maßnahme, da so von selbst eine optimale Abdichtung des Übertrittskanals 17 im Übergangsbereich zwischen den beiden Rahmenteilen 10 gewährleistet ist.

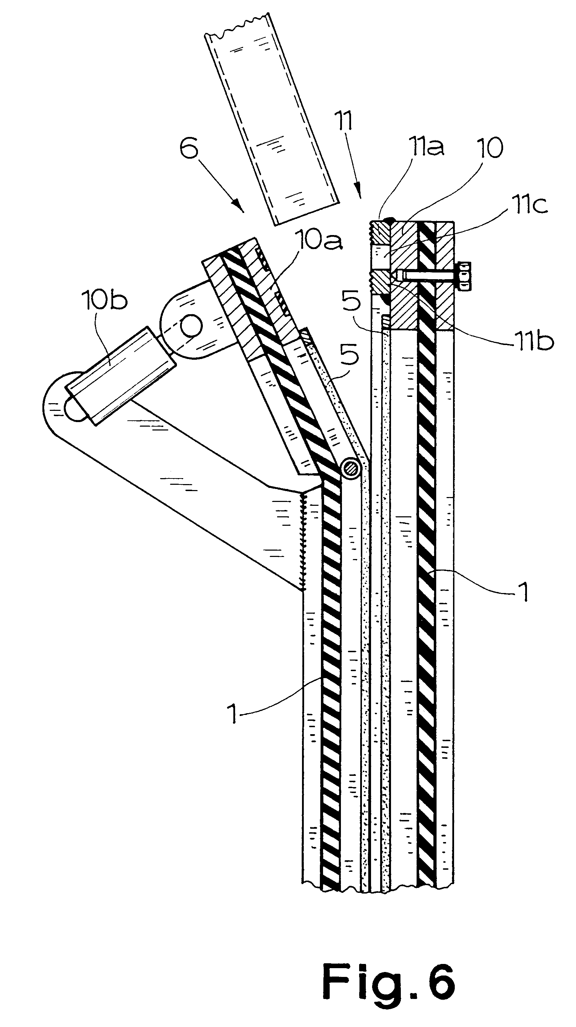

Bei dem zuvor erläuterten Ausführungsbeispiel, dargestellt in Fig. 2, ist es möglicherweise etwas schwierig, daß der Schlammzulauf 6 in Form des Zulaufstutzens seitlich abragend angesetzt wird und im Betrieb eines Absperrschiebers od. dgl. bedarf. Außerdem wird die Wandung in diesem Bereich notwendigerweise stark verformt. Das ist verschleißtechnisch schwierig. Fig. 6 zeigt demgegenüber eine Alternativlösung, bei der zur Realisierung des Schlammzulaufes 6 der Rahmen 4 in insgesamt geschlossenem Zustand auf einem kleinen Abschnitt öffenbar ist. Dazu ist ein kleiner Teil 10a eines Rahmenteils 10 abschwenkbar bzw. abnehmbar. Im dargestellten Ausführungsbeispiel ist dazu am übrigen Rahmenteil 10 eine Zylinder-Kolben-Anordnung 10b angeordnet. Fig. 6 zeigt den Teil 10a in abgeschwenktem Zustand, dadurch bildet sich im Rahmen 4 eine Öffnung, die dem Einlaufen des Schlammes dient. Ist der Aufnahmeraum 2 mit Schlamm gefüllt, so wird der Teil 10a zugeschwenkt und der Rahmen 4 ist automatisch vollständig geschlossen. Auf einen Absperrschieber kann folglich verzichtet werden, so daß der technische Aufwand insgesamt nicht größer ist als bei der ersten Alternative.

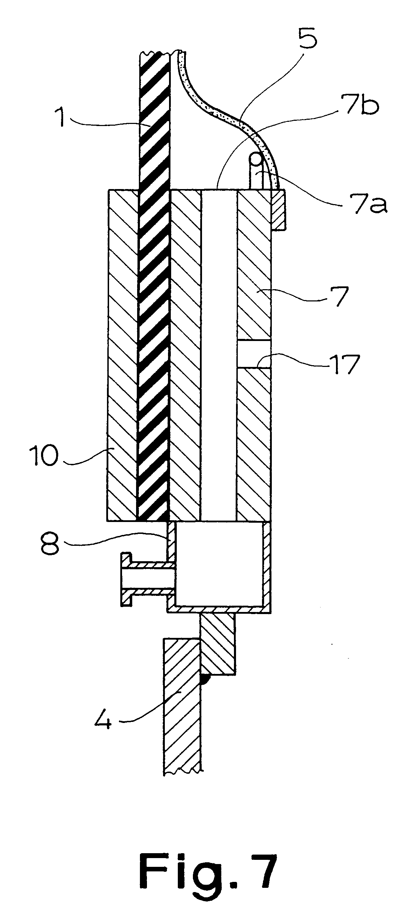

Fig. 7 zeigt eine Alternativlösung für den Filtratablauf 7. Erkannt worden ist nämlich, daß für den Filtratablauf 7 nicht unbedingt ein Stutzen mit großem Querschnitt benötigt wird. Es reicht, wenn der Filtratablauf 7 als flache Platte in der Flanschebene am einen Rahmenteil 10 ausgeführt ist. Das hat den gleichen Effekt wie beim Schlammzulauf 6, daß nämlich die Wandung 1 nicht unnötig scharf abgeknickt werden muß, sondern im wesentlichen gerade, mit lediglich einer geringen Abbiegung, geführt wird.

Zuvor ist schon die Anordnung eines Übertrittskanals 17 für das von der anderen Wandung 1 kommende Filtrat 8 anhand von Fig. 3 beim ersten Ausführungsbeispiel erläutert worden. Das in Fig. 6 dargestellte Ausführungsbeispiel macht nun eine andere Dichtungsanordnung 11 deutlich. Diese besteht aus zwei umlaufenden Dichtungsringen 11a, 11b und einer dazwischen ausgebildeten umlaufenden Vakuumkammer 11c. Die Dichtungsringe 11a, 11b sind überdies noch als Wellen- bzw. Zackenprofile ausgeführt, so daß sich bei gleicher Flächenpressung geringe Gesamt-Schließkräfte ergeben. Die zwischen den Dichtungsringen 11a, 11b ausgebildete Vakuumkammer 11c hat die Funktion einer Sammelkammer. Außerdem baut sich in dieser Vakuumkammer 11c sehr schnell ein Vor-Vakuum auf, so daß die Selbstabdichtung des Rahmens 4 nochmals wesentlich verbessert ist und insbesondere wesentlich früher einsetzt als bei einer normalen Blockdichtung. Im Zusammenhang mit dem Übertrittskanal 17 hat die zuvor erläuterte Dichtungsanordnung den weiteren Vorteil, daß dieser zwischen den Dichtungsringen 11a, 11b in der Vakuumkammer 11c münden kann. Das wiederum bedeutet, daß der Übertrittskanal 17 nicht genau fluchtend in den beiden Rahmenteilen angeordnet sein muß, wie im Ausführungsbeispiel gemäß Fig. 3. Über die Vakuumkammer 11c in der Funktion der Sammelkammer werden Lageabweichungen ausgeglichen.

Bislang ist zunächst nur zu den Maßnahmen beim Abscheiden des Filtrats 8 aus dem Schlamm 3 Stellung genommen worden. Wenn nun das Abscheiden beendet ist, bleibt im Aufnahmeraum 2 ein kleinvolumiger Filterkuchen zurück. Dieser muß aus dem Aufnahmeraum 2 entfernt werden, wie das natürlich auch beim Stand der Technik vorgesehen ist. Um dies Entfernen vornehmen zu können, empfiehlt es sich, eine entsprechende Mechanik vorzusehen, da das von Hand normalerweise kaum zu bewerkstelligen sein wird. Es empfiehlt sich also, und zwar vorzugsweise außen am Rahmen 4, einen zwischen den beiden Rahmenteilen 10 wirksamen, ein Rahmenteil 10 gegen das andere Rahmenteil 10 bewegenden Trennantrieb 18 vorzusehen. Es kann sich hierbei um einen hydraulischen, pneumatischen oder elektrischen Trennantrieb handeln. Dieser dient umgekehrt natürlich auch zum Zusammenfahren der Rahmenteile 10.

Im dargestellten und insoweit bevorzugten Ausführungsbeispiel gilt nun, daß der Trennantrieb 18 zwei auf einander gegenüberliegenden Seiten des Rahmens angeordnete Antriebseinheiten 19 aufweist und daß, vorzugsweise, jede Antriebseinheit 19 zwei Führungsstangen 20 für das sich bewegende Rahmenteil 10 aufweist. Die auf einer Seite befindliche Antriebseinheit 19 mit zwei Führungsstangen 20 für das hier rechts angeordnete, sich bewegende Rahmenteil 10 ist in Fig. 1 zu erkennen. Auf der "Rückseite" in Fig. 1 sitzt eine baugleiche Antriebseinheit 19, beide sind synchron gesteuert. Durch Betätigen der Antriebseinheiten 19 des Trennantriebs 18 wird also der rechts liegende Rahmenteil 10 bestimmungsgemäß genau symmetrisch aufgefahren, so daß der darin befindliche Filterkuchen herunterfallen kann. Dazu ist unterhalb der Gesamtanordnung ein entsprechender Trichter angeordnet, der in Fig. 1 angedeutet ist.

Es kann nun passieren, daß der Filterkuchen beim Öffnen des Rahmens 4 im Rahmen an den Wandungen 1 hängenbleibt und entweder aufreißt oder im Aufnahmeraum 2 nahe einer Wandung 1 einfach hängenbleibt. Um den Filterkuchen aus den Wandungen 1 mit Sicherheit herauszulösen, ist im dargestellten Ausführungsbeispiel eine besondere Maßnahme verwirklicht. Dort ist nämlich realisiert, daß im Aufnahmeraum 2 verteilt mehrere, einen bestimmten Maximalabstand festlegende Zugelemente 21 vorgesehen sind, durch die der Filterkuchen beim Öffnen des Rahmens 4 von den Wandungen 1 ablösbar ist. Die Zugelemente 21 sind im dargestellten Ausführungsbeispiel als Nylonseile, hoch reißfest, ausgeführt. Dabei ist hier der angegebene Maximalabstand dadurch festgelegt, daß jeweils zwei Zugelemente an einem Rahmenteil 10 befestigt sind und in den Teil des Aufnahmeraums 2 hinein verlaufen, der der mit dem anderen Rahmenteil 10 verbundenen Wandung 1 zugeordnet ist. Das ist nochmals eine besondere Maßnahme, die sicherstellt, daß sich die Zugelemente 21 beim Öffnen des Rahmens 4 so gegenläufig bewegen, daß wirklich beide Seiten des Filterkuchens von den jeweiligen Wandungen 1 abgezogen werden. Würde beispielsweise der Maximalabstand der Zugelemente 21 voneinander nur festgelegt sein, so könnte es sein, daß der Filterkuchen in einem Teil des Aufnahmeraums 2 hängenbleibt. Er wäre dann nur von der anderen Wandung abgelöst. Folglich ist die hier dargestellte Konstruktion noch zweckmäßiger. Es zeigt sich dabei, daß es ganz zweckmäßig ist, wenn die Zugelemente 21 hinter den Filtermatten 5, also zwischen Filtermatten 5 und Wandung 1 verlaufen. Sie können dann die Zugkraft auf den Filterkuchen über die Filtermatten 5 verteilt übermitteln, ansonsten wäre es möglich, daß der Filterkuchen unter der Zugkraft der Zugelemente 21 einfach wegbricht.

Nicht dargestellt ist eine weiter bevorzugte Ausführungsform der Erfindung, die dadurch gekennzeichnet ist, daß am Rahmen 4 bzw. im Aufnahmeraum 2 ein Ultraschallgeber angeordnet ist, der im Klärschlamm, an die Filtermatten 5 bzw. in einer Reinigungs-Wasserfüllung Ultraschallschwingungen verbreitet. Die Ultraschallschwingungen eines solchen Ultraschallgebers unterstützen den Filterprozeß, da sich die Filtermatten 5 so weniger schnell mit Klärschlamm zusetzen. Auch Verklumpungen entstehen nicht oder sehr viel langsamer. Beim Öffnen des Rahmens 4 löst sich der Filterkuchen leichter von den Wandungen 1, wenn die Filtermatten 5 bzw. auch die Wandungen 1 stets in Ultraschallschwingungen oszillieren. Schließlich wirkt der Ultraschallgeber auch unterstützend bei der Innenreinigung der Filtratabscheideeinrichtung, wenn er in einer Reinigungs-Wasserfüllung Ultraschallschwingungen verbreitet. Es hat sich gezeigt, daß bei Einsatz eines Ultraschallgebers die ansonsten auf Filtermatten 5 der in Rede stehenden Art aufgebrachten chemischen Flockungsmittel nahezu überflüssig sind.

Hinsichtlich der Filtermatte 5 ist es zweckmäßig, wenn das Filtertuch selbst nur begrenzt elastisch ist, jedoch optimale Filtereigenschaften aufweist. Um gleichwohl für die Filtermatte 5 eine hinreichende Gesamt-Elastizität zu realisieren empfiehlt es sich dann, daß Filtertuch mit einer elastischen Randeinfassung, beispielsweise aus einer Gummi-Fasermischung od. dgl. zu versehen. Diese kann beispielsweise auf das Gewebematerial des Filtertuches aufvulkanisiert sein.

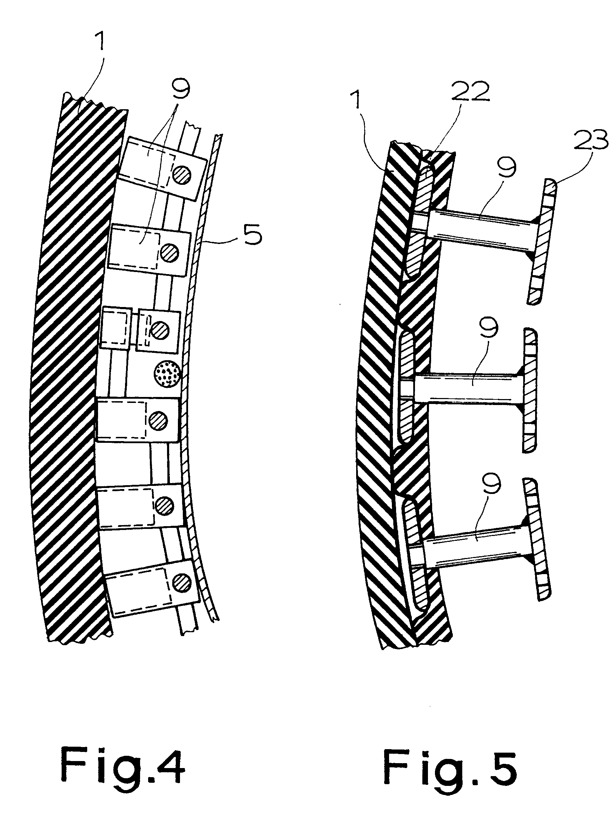

Hinsichtlich der Abstandshalter 9 ist zuvor schon einiges erläutert worden. Das in Fig. 1 dargestellte Ausführungsbeispiel zeigt an der Wandung 1 integral ausgeführte Erhebungen, die als Abstandshalter 9 dienen. Das ist sicher schon sehr zweckmäßig. Fig. 4 macht nun weiter deutlich, daß man zwischen Wandung 1 und Filtermatte 5 auch eine Kunststoff-Noppenmatte einlegen könnte, die die Funktion eines Abstandshalters 9 hat. Die Noppenmatten müßten dann an den Wandungen irgendwie befestigt sein. Solche Noppenmatten sind am Markt und bestehen häufig aus Polyäthylen. Die Noppen sollten, anders als konkret dargestellt, eher etwas gerundet sein, um die Filtermatte 5 nicht zu beschädigen. Für die Filtermatte gilt entsprechend, daß man diese als Nylon-Gewebefilter oder als Kunststoff-Filament-Gewebefilter, beispielsweise Polymerfilter, ausführen kann.

Fig. 5 zeigt eine weitere Alternative, die darin besteht, daß die Abstandshalter 9 mit Befestigungsfüßchen 22 in die Wandungen 1 eingebettet, insbesondere einvulkanisiert sind. Dabei gilt, daß das Ausführungsbeispiel aus Fig. 5 noch insoweit besonders ist, als die Abstandshalter 9 durch tellerartige Erweiterungen 23 mit Abstand von den Wandungen 1 eine mit Durchbrechungen versehene Innenfläche bilden, die die Funktion einer Filtermatte 5 hat. Solche Abstandshalter 9 können beispielsweise dann eingesetzt werden, wenn die Filtratabscheideeinrichtung mit härterem Material zu tun hat als normalem Schlamm 3. Insbesondere sind solche Abstandshalter 9 dann einsetzbar, wenn die Filtratabscheideeinrichtung zur Müllverdichtung eingesetzt wird.

Generell gilt, daß an Filtratabscheideeinrichtungen der erfindungsgemäßen Art in einer Mehrzahl in den Anforderungen entsprechender Weise parallel schalten kann. Man kann eine Filtratanlage also praktisch stufenweise beliebig erweitern.

In Fig. 7 ist an der Platte, die den Filtratablauf 7 bildet, noch ein Abstandshalter 7a vorgesehen, der verhindert, daß die Filtermatte 5 den Eintritt 7b des Filtratablaufes zusetzt.

## Patentansprüche

1. Filtratabscheideeinrichtung, insbesondere für die Klärschlammentsorgung, mit einem von zwei Wandungen (1) begrenzten Aufnahmeraum (2) für den zu filternden Schlamm (3), einem die Wandungen (1) verbindenden, den Aufnahmeraum (2) abdichtenden Rahmen (4), im Aufnahmeraum (2) an den Wandungen (1) angeordneten Filtermatten (5) zur Fest/Flüssig-Trennung bzw. mindestens einer, an einer Wandung (1) angeordneten Filtermatte (5), einem mit dem Aufnahmeraum (2) verbundenen Schlammzulauf (6) und einem mit dem Raum zwischen den Wandungen (1) und den Filtermatten (5) bzw. der Wandung (1) und der Filtermatte (5) verbundenen Filtratablauf (7), wobei zur Entfernung des vom Filtrat (8) befreiten, trockenen Filterkuchens die Wandungen (1) voneinander entfernt werden und der Rahmen (4) geöffnet wird, **dadurch gekennzeichnet,** daß die Wandungen (1) bzw. mindestens eine Wandung (1) aus einem flexibel verformbaren, flüssigkeits- und gasundurchlässigen Material besteht, daß zwischen den Wandungen (1) und den ebenso flexiblen Filtermatten (5) den Bewegungen der Wandungen (1) und der Filtermatten (5) folgende Abstandshalter (9) vorgesehen sind, die so konstruiert sind, daß durch den Unterdruck die Filtermatten (5) nicht an die Wandungen (1) herangedrückt werden, daß jeder Wandung (1) ein formsteifes Rahmenteil (10) zugeordnet ist und die Rahmenteile (10) über eine Dichtungsanordnung (11) abdichtend miteinander verbunden sind und daß der Filtratablauf (7) oder ein weiterer mit dem Raum zwischen den Wandungen (1) und den Filtermatten (5) verbundener Absaugstutzen an eine Vakuumpumpe (12) angeschlossen bzw. anschließbar ist.

2. Filtratabscheideeinrichtung nach Anspruch 1, dadurch gekennzeichnet, daß zwischen dem Filtratablauf (7) und der Vakuumpumpe (12) ein Filtratabscheider (13) angeordnet ist, und/oder daß der Schlammzulauf (6) oben und der Filtratablauf (7) unten angeordnet ist, und/oder daß der Rahmen (4) außen einen im wesentlichen kreisrunden Querschnitt aufweist, und/oder daß der Rahmen (4) in vertikaler Anordnung in einem Traggestell (14) montiert ist, und/oder daß am Schlammzulauf (6) ein Absperrventil (15), vorzugsweise in Form eines Absperrschiebers, angeordnet ist, und/oder daß am Filtratablauf (7) ein Absperrventil (16), vorzugsweise in Form eines Absperrschiebers, angeordnet ist.

3. Filtratabscheideeinrichtung nach Anspruch 1 oder 2, dadurch gekennzeichnet, daß an einem Rahmenteil (10) der Schlammzulauf (6) in Form eines Zulaufstutzens und am gleichen oder am anderen Rahmenteil (10) der Filtratablauf (7) in Form eines Ablaufstutzens angeordnet ist und daß der Rahmenteil (10) im Bereich des Filtratablaufes (7) den Befestigungsbereich für die Wandung (1) auf einer Seite und den Befestigurgsbereich für die Filtermatte (5) auf der anderen Seite des Filtratablaufs (7) aufweist.

4. Filtratabscheideeinrichtung nach einem der Ansprüche 1 bis 3, dadurch gekennzeichnet, daß zur Realisierung des Schlammzulaufes (6) der Rahmen (4) in insgesamt geschlossenem Zustand auf einem kleinen Abschnitt öffenbar ist und daß dazu ein kleiner Teil (10a) eines Rahmenteils (10) abschwenkbar bzw. abnehmbar ist und/oder daß der Filtratablauf (7) als flache Platte in der Flanschebene am einen Rahmenteil (10) ausgeführt und der Befestigungsbereich für die Wandung (1) auf einer Seite und der Befestigungsbereich für die Filtermatte (5) auf der anderen Seite der flachen Platte vorgesehen ist.

5. Filtratabscheideeinrichtung nach einem der Ansprüche 1 bis 4, dadurch gekennzeichnet, daß in den Rahmenteil (10), insbesondere am Filtratablauf (7), ggf. aber auch an anderen Stellen, ein Übertrittskanal (17) für von der anderen Wandung (1) kommendes Filtrat (8) vorgesehen ist und daß, vorzugsweise, der Übertrittskanal (17) in der Dichtungsanordnung (11) verläuft.

6. Filtratabscheideeinrichtung nach einem der Ansprüche 1 bis 5, dadurch gekennzeichnet, daß die Dichtungsanordnung (11) aus zwei umlaufenden Dichtungsringen (11a, 11b) und einer dazwischen ausgebildeten umlaufenden Vakuumkammer (11c) besteht und daß, vorzugsweise, der Übertrittskanal (17) zwischen den Dichtungsringen (11a, 11b) in der Vakuumkammer (11c) mündet.

7. Filtratabscheideeinrichtung nach einem der Ansprüche 1 bis 6, dadurch gekennzeichnet, daß, vorzugsweise außen am Rahmen (4), ein zwischen den beiden Rahmenteilen (10) wirksamer, ein Rahmenteil (10) gegen das andere Rahmenteil (10) bewegender Trennantrieb (18) angeordnet ist und, vorzugsweise, daß der Trennantrieb (18) zwei auf einander gegenüberliegenden Seiten des Rahmens angeordnete Antriebseinheiten (19) aufweist und daß, vorzugsweise, jede Antriebseinheit (19) zwei Führungsstangen (20) für das sich bewegende Rahmenteil (10) aufweist.

8. Filtratabscheideeinrichtung nach einem der Ansprüche 1 bis 7, dadurch gekennzeichnet, daß im Aufnahmeraum (2) verteilt mehrere, einen bestimmten Maximalabstand festlegende Zugelemente (21) vorgesehen sind, durch die der Filterkuchen beim Öffnen des Rahmens (4) von den Wandungen (1) ablösbar ist, und/oder daß am Rahmen (4) bzw. im Aufnahmeraum (2) ein Ultraschallgeber angeordnet ist, der im Klärschlamm, an die Filtermatten (5) bzw. in einer Reinigungs-Wasserfüllung Ultraschallschwingungen verbreitet und/oder daß die Filtermatte (5) aus nur begrenzt elastischem Filtertuch und einer elastischen Randeinfassung besteht.

9. Filtratabscheideeinrichtung nach einem der Ansprüche 1 bis 8, dadurch gekennzeichnet, daß die Abstandshalter (9) als an den Wandungen (1) integral ausgebildete Noppen ausgeführt sind oder daß die Abstandshalter (9) als an den Wandungen (1) befestigte Kunststoff-Noppenmatten ausgeführt sind, und/oder daß die Abstandshalter (9) mit Befestigungsfüßchen (22) in die Wandungen (1) eingebettet, insbesondere einvulkanisiert sind, und/oder daß die Abstandshalter (9) durch tellerartige Erweiterungen (23) mit Abstand von den Wandungen (1) eine mit Durchbrechung versehene Innenfläche bilden, die die Funktion einer Filtermatte (5) hat.

10. Anlage aus mehreren, parallel geschalteten Filtratabscheideeinrichtungen nach einem der Ansprüche 1 bis 9.

## Claims

1. A filtrate separation device, particularly for the disposal of sewage sludge, having a receiver space (2) delimited by two walls (1) for the sludge (3) to be filtered, a frame (4) joining the walls (1) and sealing the receiver space (2), filter mats (5) disposed in the receiver space (2) on the walls (1) for solid/liquid separation or at least one filter mat (5) disposed on one wall (1), a sludge inlet (6) connected to the receiver space (2) and a filtrate outlet (7) connected to the space between the walls (1) and the filter mats (5) or the wall (1) and the filter mat (5), wherein in order to remove the dry filter cake freed from filtrate (8) the walls (1) are removed from each other and the frame (4) is opened, characterised in that the walls (1) or at least one wall (1) consists of a flexibly deformable material which is impermeable to gas and liquid, that distance pieces (9) which follow the movements of the walls (1) and of the filter mats (5) are provided between the walls (1) and the filter mats (5), which are likewise flexible, that a deformation-resistant frame part (10) is associated with each wall (1), which frame part is constructed so that the filter mats (5) are not pressed on to the walls (1) by the reduced pressure, and the frame parts (10) are joined sealed to each other via a seal arrangement (11), and that the filtrate outlet (7) or a further draw-off connection piece connected to the space between the walls (1) and the filter mats (5) is connected or can be connected to a vacuum pump (12).

2. A filtrate separation device according to claim 1, characterised in that a filtrate separator (13) is disposed between the filtrate outlet (7) and the vacuum pump (12), and/or that the sludge inlet (6) is disposed at the top and the filtrate outlet (7) is disposed at the bottom, and/or that the frame (4) has a substantially circular external cross-section, and/or that the frame (4) is mounted in a vertical arrangement in a load bearing structure (14), and/or that a stop valve (15), preferably in the form of a gate stop valve, is disposed on the sludge inlet (6), and/or that a stop valve (16), preferably in the form of a gate stop valve, is disposed on the filtrate outlet (7).

3. A filtrate separation filtrate according to claim 1 or 2, characterised in that the sludge inlet (6) is disposed in the form of an inlet connection piece on one frame part (10) and the filtrate outlet (7) is disposed in the form of an outlet connection piece on the same or on the other frame part (10), and that in the region of the filtrate outlet (7) the frame part (10) has the fixing region for the wall (1) on one side of the filtrate outlet and the fixing region for the filter mat (5) on the other side of the filtrate outlet (7).

4. A filtrate separation device according to any one of claims 1 to 3, characterised in that in order to produce the sludge inlet (6) a small section of the frame (4) can be opened when the latter is in its completely closed state and for this purpose a small part (10a) of one frame part (10) can be swung out or removed and/or that the filtrate outlet (7) is designed as a flat plate in the plane of the flange on one frame part (10) and the fixing region for the wall (1) is provided on one side of the flat plate and the fixing region for the filter mat (5) is provided on the other side of the flat plate.

5. A filtrate separation device according to any one of claims 1 to 4, characterised in that an overflow channel (17) for filtrate (8) coming from the other wall (1) is provided in the frame part (10), particularly at the filtrate outlet (7) but optionally at other locations also, however, and that the overflow channel (17) preferably extends in the seal arrangement (11).

6. A filtrate separation device according to any one of claims 1 to 5, characterised in that the seal arrangement (11) consists of two encircling sealing rings (11a, 11b) and an encircling vacuum chamber (11c) constructed therebetween, and that the overflow channel (11c) preferably leads into the vacuum chamber (17) between the sealing rings (11a, 11b).

7. A filtrate separation device according to any one of claims 1 to 6, characterised in that a separating drive (18) is provided, preferably outside on the frame (4), which separating drive acts between the two frame parts (10) and which moves one frame part (10) in relation to the other frame part (10), and that the separating drive (18) preferably comprises two drive units (19) disposed on two mutually opposite sides of the frame, and that each drive unit (19) preferably has two motion rods (20) for the moving frame part (10).

8. A filtrate separation device according to any one of claims 1 to 7, characterised in that a plurality of tensile elements (21) which determine a defined maximum distance is distributed in the receiver space (2), by means of which tensile elements the filter cake can be removed from the walls (1) when the frame (4) is opened, and/or that an ultrasonic transmitter, which dissipates ultrasonic vibrations in the sewage sludge, on to the filter mats (5) or in a cleaning water charge, is disposed on the frame (4) or in the receiver space (2), and/or that the filter mat (5) consists of a filter cloth having only restricted elasticity and of an elastic edge surround.

9. A filtrate separation device according to any one of claims 1 to 8, characterised in that the distance pieces (9) are designed as studs integrally formed on the walls (1) or that the distance pieces (9) are designed as plastic studded mats fixed to the walls (1), and/or that the distance pieces (9) are embedded in the walls (1) by means of fixing feet (22), and in particular are vulcanised in, and/or that the distance pieces (9) form an internal surface provided with openings by means of plate-like enlargements (23) at a distance from the walls (1), which internal surface has the function of a filter mat (5).

10. An installation comprising a plurality of filtrate separation devices according to any one of claims 1 to 9, connected in parallel.

## Revendications

1. Dispositif de séparation de filtrat, en particulier pour l'élimination de boues de curage, comprenant une chambre de réception (2) pour la boue (3) à filtrer, délimitée par deux parois (1), un cadre (4) reliant les parois (1) et procurant une étanchéité à la chambre de réception (2), des matelas filtrants (5) disposés dans la chambre de réception (2) contre les parois (1) pour la séparation solide/liquide, respectivement au moins un matelas filtrant (5) disposé contre une paroi (1), une admission de boues (6) reliée à la chambre de réception (2) et une évacuation de filtrat (7) reliée à l'espace ménagé entre les parois (1) et les matelas filtrants (5), respectivement entre la paroi (1) et les matelas filtrants (5), dans lequel pour éliminer le gâteau de filtre séché, libéré du filtrat (8) on éloigne l'une de l'autre les parois (1) et on ouvre le cadre (4), caractérisé en ce que les parois (1), respectivement au moins une paroi, (1) sont constituées par une matière flexible déformable, imperméable aux liquides et aux gaz, en ce qu'on prévoit des écarteurs (9) entre les parois (1) et les matelas filtrants (5) également flexibles, qui suivent les mouvements des parois (1) et des matelas filtrants (5) et qui sont construits de telle sorte qu'à l'aide du vide, les matelas filtrants (5) ne sont pas pressés contre les parois (1), en ce qu'une partie de cadre (10) résistant à la déformation est attribuée à chaque paroi (1), les parties de cadre (10) étant reliées l'une à l'autre de manière étanche à l'intervention d'un agencement d'étanchéification (11), et en ce que l'évacuation de filtrat (7) ou une tubulure d'aspiration supplémentaire reliée à l'espace ménagé entre les parois (1) et les matelas filtrants (5), est raccordée, respectivement peut être raccordée à une pompe à vide (12).

2. Dispositif de séparation de filtrat selon la revendication 1, caractérisé en ce que, entre l'évacuation de filtrat (7) et la pompe à vide (12) est disposé un séparateur de filtrat (13), et/ou en ce que l'admission de boues (6) est disposée en haut et l'évacuation de filtrat (7) est disposée en bas, et/ou en ce que le cadre (4) présente à l'extérieur une section transversale essentiellement circulaire, et/ou en ce que le cadre (4) est monté en agencement vertical dans un bâti de support (14), et/ou en ce qu'on dispose (1) à l'admission de boues (6) une soupape anti-retour (15) de préférence sous la forme d'un coulisseau anti-retour, et/ou en ce qu'on dispose à l'évacuation de filtrat (7) une soupape anti-retour (16) de préférence sous la forme d'un coulisseau anti-retour.

3. Dispositif de séparation de filtrat selon la revendication 1 ou 2, caractérisé en ce qu'on dispose, sur une partie de cadre (10), l'admission de boues (6) sous la forme d'une tubulure d'admission et, sur la même partie de cadre (10) ou sur une autre partie de cadre (10), l'évacuation de filtrat (7) sous la forme d'une tubulure d'évacuation, et en ce que la partie du cadre (10) présente, dans la zone de l'évacuation de filtrat (7), l'endroit de fixation pour la paroi (1) d'un côté et l'endroit de fixation pour le matelas filtrant (5) de l'autre côté de l'évacuation de filtrat (7).

4. Dispositif de séparation de filtrat selon une quelconque des revendications 1 à 3, caractérisé en ce que, pour réaliser l'admission de boues (6), on peut ouvrir sur une petite section le cadre (4) se trouvant complètement à l'état fermé, et en ce que, à cet effet, on peut faire pivoter, respectivement retirer une petite partie (10a) d'une partie de cadre (10), et/ou en ce que l'évacuation de filtrat (7) est réalisée sous forme d'une plaque plate dans le plan de la bride contre une partie de cadre (10) et on prévoit la zone de fixation pour la paroi (1) d'un côté et la zone de fixation pour le matelas filtrant (5) de l'autre côté de la plaque plate.

5. Dispositif de séparation de filtrat selon une quelconque des revendications 1 à 4, caractérisé en ce que, dans la partie de cadre (10) en particulier à l'évacuation de filtrat (7) mais éventuellement, également à d'autres endroits, on prévoit un canal de transfert (17) pour le filtrat (8) provenant de l'autre paroi (1), et en ce que, de préférence, le canal de transfert (17) s'étend dans l'agencement d'étanchéification (11).

6. Dispositif de séparation de filtrat selon une quelconque des revendication 1 à 5, caractérisé en ce que l'agencement d'étanchéification (11) est constitué par deux anneaux d'étanchéification périphérique (11a, 11b) et par une chambre de vide périphériques (11c) réalisée entre eux et, en ce que, de préférence, le canal de transfert (17) débouche dans la chambre de vide (11c) entre les anneaux d'étanchéification (11a, 11b).

7. Dispositif de séparation de filtrat selon l'une quelconque des revendications 1 à 6, caractérisé en ce que, de préférence, à l'extérieur sur le cadre 4, on dispose une commande de séparation (18), active entre les deux parties de cadre (10), déplaçant une partie de cadre (10) contre l'autre partie de cadre (10) et, de préférence, en ce que la commande de séparation (18) présente deux unités d'entraînement disposées sur les côtés mutuellement opposés du cadre, et en ce que, de préférence, chaque unité de commande (19) présente deux barres de guidage (20) pour la partie de cadre (10) qui se déplace.

8. Dispositif de séparation de filtrat selon l'une quelconque des revendications 1 à 7, caractérisé en ce qu'on prévoit plusieurs éléments de traction (21) distribués dans la chambre de réception (2) fixant un écartement maximal déterminé, à l'aide desquels on peut détacher le gâteau de filtre des parois (1) lors de l'ouverture du cadre (4), et/ou en ce que, sur le cadre (4), respectivement dans la chambre de réception (2), est disposé un émetteur d'ultrasons qui répand des oscillations ultrasonores dans les boues de curage contre les matelas filtrants (5), respectivement lors d'un remplissage à l'aide d'eau de nettoyage, et/ou en ce que le matelas filtrant (5) est constitué par un tissu filtrant à élasticité seulement limitée et par un encadrement marginal élastique.

9. Dispositif de séparation de filtrat selon l'une quelconque des revendications 1 à 8, caractérisé en ce que les écarteurs (9) sont réalisés en forme de noppes solidaires aux parois (1) ou bien en que les écarteurs (9) sont réalisés en forme de matelas noppés en matière synthétique fixés aux parois (1), et/ou en ce que les écarteurs (9) sont incorporés dans les parois (1) à l'aide de petites pattes de fixation (22), en particulier sont incorporés par vulcanisation, et/ou en ce que les écarteurs (9) forment à l'aide d'extensions (23) en forme d'assiette, à l'écart des parois (1), une surface munie d'un évidement, qui joue le rôle d'un matelas filtrant (5).

10. Installation constituée par plusieurs dispositifs de séparation de filtrats selon l'une quelconque des revendications 1 à 9 montés en parallèle.
